## Europäisches Patentamt
## European Patent Office
## Office européen des brevets

(11) Veröffentlichungsnummer: **0 073 347**
**B1**

(12) # EUROPÄISCHE PATENTSCHRIFT

(45) Veröffentlichungstag der Patentschrift:
01.07.87

(51) Int. Cl.⁴: **B 29 C 47/04,** B 29 D 7/00

(21) Anmeldenummer: **82106882.2**

(22) Anmeldetag: **30.07.82**

(54) Verfahren und Vorrichtung zur Herstellung einer Farbkeilfolie.

(30) Priorität: **18.08.81 DE 3132509**

(43) Veröffentlichungstag der Anmeldung:
**09.03.83 Patentblatt 83/10**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**EP-A-0 010 895**
**EP-A-0 052 491**
**CH-A-518 791**
**DE-A-1 504 354**
**DE-A-2 622 289**
**DE-A-2 631 099**
**DE-A-3 010 691**
**DE-C-2 035 578**
**GB-A-1 390 226**
**US-A-2 897 543**
**US-A-3 486 195**
**US-A-3 565 737**

(73) Patentinhaber: **DYNAMIT NOBEL AKTIENGESELLSCHAFT, Postfach 1209, D-5210 Troisdorf, Bez. Köln (DE)**

(72) Erfinder: **Brinkmann, Hans, Stresemannstrasse 5, D-5210 Troisdorf (DE)**
Erfinder: **Pabst, Horst, Eisenachstrasse 80, D-5205 St. Augustin- Hangelar (DE)**

## Beschreibung

Die Erfindung betrifft ein Verfahren zur Herstellung von Farbkeilfolien gemäß dem Oberbegriff des Anspruchs 1 sowie eine Vorrichtung zur Durchführung dieses Verfahrens gemäß dem Oberbegriff des Anspruchs 3. Farbkeilfolien dienen als Zwischenschicht zur Herstellung von Sicherheitsglas, insbesondere für Windschutzscheiben von Automobilen und dgl., zwecks Abblendung und Schutz vor zu grellem Lichteinfall im oberen Bereich der Windschutzscheibe. Sie bestehen zweckmäßig aus einem farbigen Bereich, einem ungefärbten Bereich und einem dazwischenliegenden Farbkeilbereich. In dem Farbkeilbereich geht die Farbintensität kontinuierlich vom farbigen in den ungefärbten Bereich über.

Ein gattungsgemäßes Verfahren ist aus der DE-C- 20 35 578 rbekannt. Dabei wird ein Hauptstrom eines geschmolzenen thermoplastischen Kunststoffs durch ein Breitschlitzwerkzeug gepreßt und zu einer Folie geformt. In den Hauptstrom aus ungefärbter Kunststoffschmelze wird ein Strom gefärbten Kunststoffs zu einem Zeitpunkt eingespritzt, zu dem sich der Hauptstrom noch in Querrichtung ausbreitet. Der zugeführte gefärbte Kunststoff wird dann, entsprechend dem Verlauf der Stromlinien quer zur Extrusionsrichtung verteilt. Dabei entsteht ein Bereich kontinuierlichen Übergangs der Farbintensität.

Nachteilig bei diesem Verfahren ist es, daß der Querschnitt in dem die gefärbte Masse in die ungefärbte Masse eingespritzt wird, nicht mit dem Querschnitt des Farbübergangsbereichs der farbigen Folie übereinstimmt. Deshalb ist es bei dem bekannten Verfahren nicht möglich, die Breite und den Farbintensitätslauf im Bereich des Farbübergangs genau reproduzierbar zu erzeugen.

Aufgabe der Erfindung ist es, ausgehend von dem Verfahren gemäß der DE-C- 20 35 578, ein Verfahren und eine Vorrichtung zur Verfügung zu stellen zur Herstellung einer Endlosfolie aus thermoplastischem Kunststoff mit einem farbigen Bereich, einem ungefärbten Bereich und einem dazwischenliegenden Bereich, in dem die Farbintensität kontinuierlich vom gefärbten in den ungefärbten Bereich übergeht, wobei Lage und Intensitätsverlauf dieses Übergangsbereichs genau vorherbestimmbar und reproduzierbar sind.

Gemäß der Erfindung wird diese Aufgabe bei einem gattungsgemäßen Verfahren durch die kennzeichnenden Merkmale des Anspruchs 1 sowie durch eine Vorrichtung gemäß den Merkmalen des Anspruchs 3 gelöst.

Es wird so verfahren, daß für die Erzeugung des Farbkeils die gefärbte Schmelze - in Extrusionsrichtung gesehen, vor dem Staubalken über eine Sonde, die aus einer Injektionsdüse gespeist wird, eingespritzt. Die Sonde hat dabei eine keilförmige Austrittsöffnung (Nut), so daß der aus der Sonde austretende gefärbte Schmelzestrom ebenfalls einen keilförmigen Querschnitt aufweist. An der Stelle, an der durch die Sonde gefärbte Schmelze in die ungefärbte Schmelze eingespritzt wird, wird vorzugsweise der Strom der ungefärbten Schmelze soweit gedrosselt, daß die ungefärbte Schmelze durch die gefärbte Schmelze in einem keilförmigen Querschnitt ohne Erhöhung der Fließgeschwindigkeit ersetzt werden kann. Die Erstreckung des Farbkeils wird durch auswechselbare Sonden einer Länge zwischen 10 und 100 mm bestimmt.

Das erfindungsgemäße Verfahren ist besonders geeignet zur Herstellung von Folien auf Basis von Polyvinylbutyral (PVB) oder auch Celluloseacetat.

Nach einer bevorzugten Ausgestaltung des erfindungsgemäßen Verfahrens werden zur Regelung der Folienstärke die Dicken des ungefärbten und des gefärbten Folienteils einschließlich des Übergangsbereichs miteinander verglichen. Dabei wird über einen Rechner das Förderorgan für den gefärbten Schmelzestrom und die Zufuhr zur Sonde entsprechend geregelt.

Bevorzugte Ausführungsformen der Vorrichtung zur Durchführung des erfindungsgemäßen Verfahrens sind in den Ansprüchen 4 und 5 angegeben.

Das Prinzip der erfindungsgemäßen Vorrichtung besteht im wesentlichen aus der Aneinanderflanschung zweier im Querschnitt geometrisch gleicher Breitschlitzwerkzeuge unterschiedlicher Breite, wobei dem einen Werkzeug eine farblose Schmelze und dem anderen Werkzeug über ein zweites Extrudersystem farbige Schmelze zuführbar ist. Zur Erzeugung des Farbkeils ist in dem einen Werkzeug eine Injektionsdüse mit einer Sonde eingebaut, durch die über eine separat drosselbare Bypassleitung z. B. farbige PVB-Masse seitlich in das andere Werkzeug eingespritzt wird. Die Sonde, die insbesondere keilförmig ausgebildet ist und je nach Farbkeillänge unterschiedlich tief in den anderen Werkzeugteil hineinragt, erfüllt dabei zwei Funktionen:

a) keilförmige Abblendung des farblosen Schmelzestromes durch die keilförmige Ausgestaltung der Sonde und

b) Erzeugung des Farbkeils durch eine keilförmige Austrittsöffnung (Nut) der Sonde.

Durch den Farbkeil werden zusätzlich beide Masseströme miteinander verschmolzen. Die Sonde ist für die verschiedenen Farbkeillängen, die z. B. zwischen 10 und 100 mm, vorzugsweise zwischen 15 und 60 mm, liegen, auswechselbar.

Die Erfindung realisiert dadurch den Vorteil, daß die Breite und die Intensität des Farbkeils geometrisch exakt durch die Geometrie der Sonde und durch die Einspritzmenge für farbige Schmelze mittels der Injektionsdüse und der Sonde vorgegeben 10 werden können.

Aus verfahrenstechnischen Gründen ist es sinnvoll, für die Erzeugung des Farbkeils die farbige Masse, in Extrusionsrichtung betrachtet, vor dem Staubalken einzuspritzen. Die Breitschlitzdüse hat vorzugsweise in diesem Bereich eine flexible Lippe, damit eine Dickenkorrektur der Folie im Keilbereich erfolgen kann. Bei kleineren Breiten des gefärbten Bereichs der Folie oder einer geringeren gewünschten Gesamtbreite der Folie ist es möglich, die Breitschlitzdüsen jeweils im gewünschten Maße, durch z. B. Aluminiumeinlegeteile, abzublenden, so daß mit einer standartisierten Vorrichtung Farbkeilfolien unterschiedlicher Breite hergestellt werden können.

Die gefärbte Schmelze wird durch eine Bypass-Leitung der vorzugsweise keilförmigen Sonde der Injektionsdüse zugeführt. Durch die keilförmige Austrittsöffnung (Nut) der Sonde wird dabei ein Strom gefärbter Schmelze erzeugt, der über den Verlauf der Sonde abnimmt und dessen Menge am Ende der Sonde 0 wird.

Gleichzeitig wird der farblose Schmelzestrom durch die vorzugsweise keilförmig ausgestaltete Düse abgeblendet, und der farblose Schmelzestrom hat den Wert 0 an der Stelle des maximalen Stroms durch die Sonde. Die Strömungsmenge an ungefärbter Schmelze nimmt entsprechend der Verringerung der Stromungsmenge an gefärbter Schmelze durch die Sonde zu, wodurch der Farbkeil mit definiertem Anstiegswinkel erzeugt wird. Die Sonde kann vorzugsweise stromlinienförmig in ihrem Querschnitt ausgebildet werden.

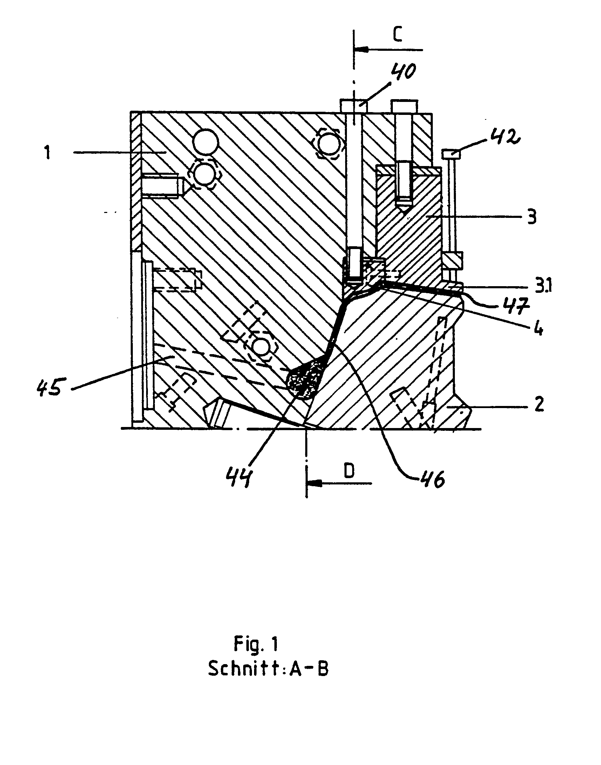

Die Erfindung wird nachfolgend anhand eines Ausführungsbeispiels 5 und der Figuren 1 bis 5 erläutert.

Es zeigen dabei

Figur 1 einen Schnitt A-B einer erfindungsgemäßen Vorrichtung,

Figur 2 einen Schnitt durch ein Breitschlitzwerkzeug entlang der Linie C-D,

Figur 3 die Injektionsdüse in drei Ansichten,

Figur 4 eine Prinzipskizze der erfindungsgemäßen Vorrichtung,

Figur 5 einen Schnitt durch die erfindungsgemäße Vorrichtung entlang der Linie C-D.

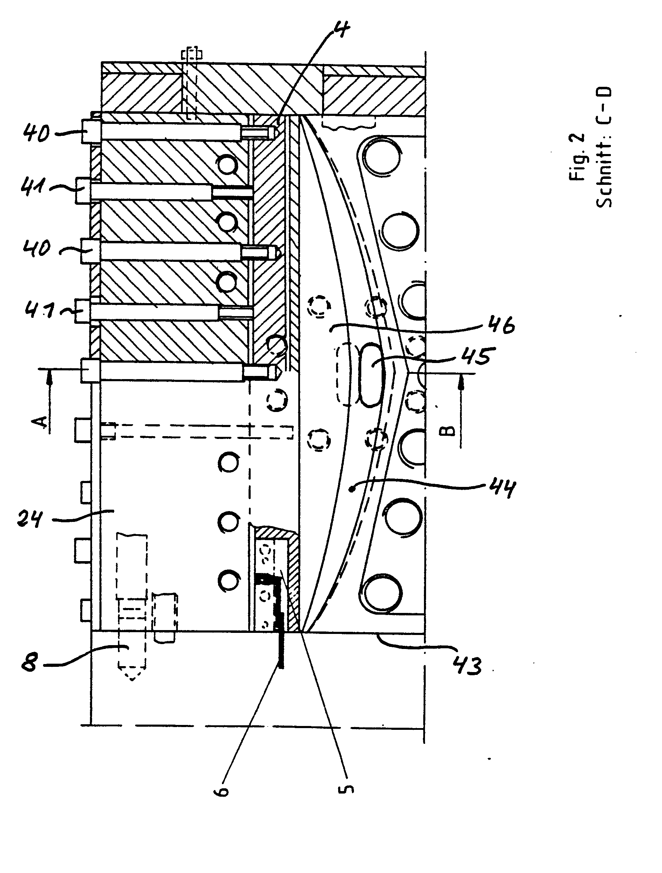

Die Schmelze des thermoplastischen Kunststoffs wird dabei jeweils durch den Zufuhrkanal 45 in den Verteilerkanal 44, 44a gepreßt und dort zu einer Folie geformt. Die Schmelze fließt dann in nahezu konstanter Breite durch den Dammspalt 46, der durch den Verteilerblock 1 und durch die Unterlippe 2 begrenzt wird, entlang des Staubalkens 4 und der Oberlippe 3 zum Düsenaustrittsspalt 47. Die Höhe des Düsenaustrittsspalts 47 wird durch die flexible Oberlippe 3.1 mittels Einstellschrauben 42 festgelegt. Im Querschnitt betrachtet bildet der Verteilerkanal 44 einen etwa kleiderbügelförmigen Bereich, der für eine gleichmäßige Verteilung der Schmelze sorgt. Mittels Druckschrauben 41 und Zugschrauben 40 wird der Spalt zwischen dem Staubalken 4 und der Unterlippe 2 zwecks Dickenkorrektur der Folie eingestellt. In Figur 2 ist der Bolzen 8 zur Anflanschung der beiden Breitschlitzwerkzeuge angedeutet. Weiterhin ist aus Figur 2 die Lage der Injektionsdüse 5 mit der Sonde 6 dargestellt. In dem Ausführungsbeispiel wird durch das Werkzeugteil 24 die gefärbte Schmelze und durch das Werkzeugteil 20 die ungefärbte Schmelze gepreßt.

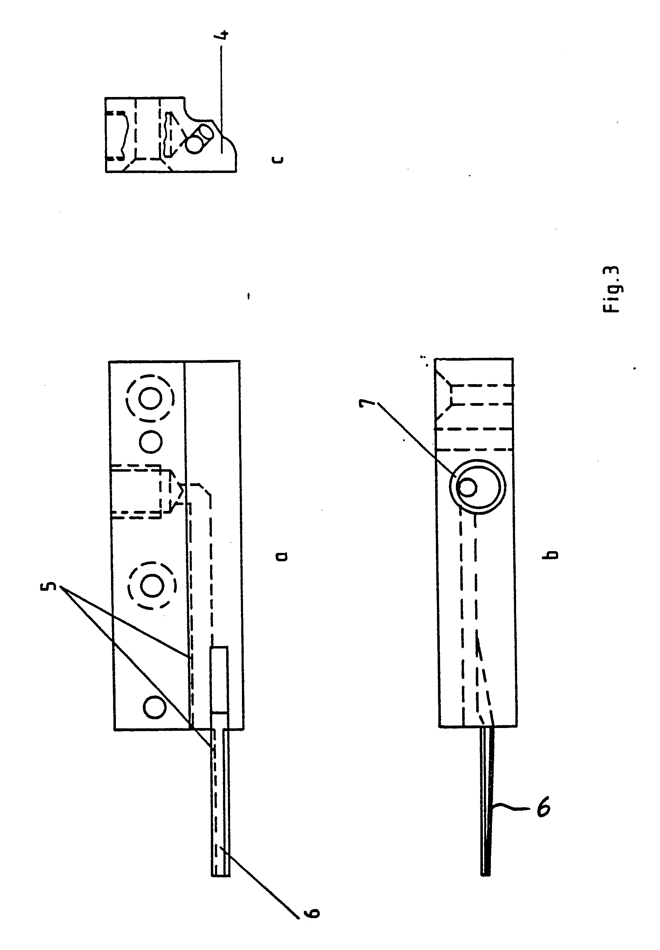

Figur 3 zeigt die Injektionsdüse 5 mit der Bypassleitung 7 und den durch den Staubalken 4 zur Sonde 6 führenden Verbindungskanal für die gefärbte Schmelze in den drei Ansichten: Vorderansicht a, Draufsicht b und Seitenansicht c vom Staubalke und Sonde.

Aus Ansicht b ist die keilförmige Ausbildung der Sonde 6 mit ebenfalls keilförmigem Austrittsspalt (Nut) ersichtlich.

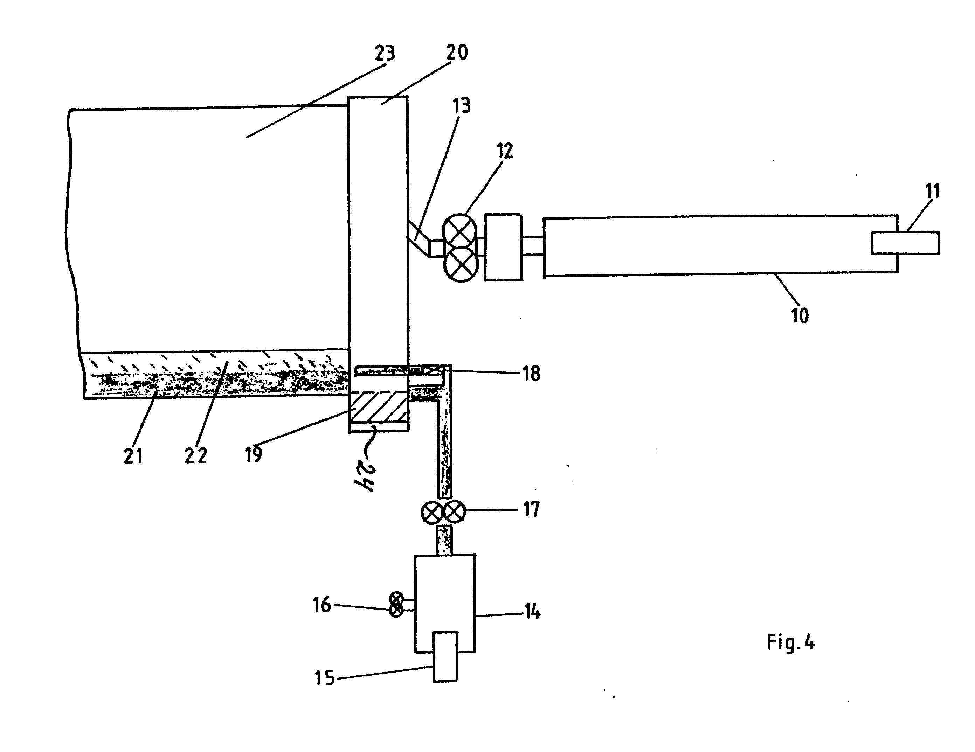

Figur 4 zeigt eine schematische Gesamtzusammenstellung einer Anlage zur Herstellung einer Farbkeilfolie aus z. B. Polyvinylbutyral. Die Extruder 10 und 14 werden über Dosierbandwagen 11 und 15 mit Polyvinylbutyral beschickt. Der Extruder 14 wird mit der Farbkomponente mittels einer Dosierpumpe 16 beschickt. Das Ventil 18, das auch als Zahnradpumpe ausgebildet sein kann, regelt die Menge der dem Bypass zugeführten farbigen Schmelze. Über die Zahnradpumpen 12 und 17 werden die ungefärbte Schmeize über das Anschlußstück 13 in den Werkzeugteil 20 bzw. die gefärbte Schmelze über eine Hauptleitung und eine mittels Zahnradpumpe geregelte Bypassleitung dem Werkzeugteil 24 zugeführt. Die Breite des voll eingefärbten Teils 21 der Farbkeilfolie 23 variiert je nach dem Einsatzzweck, desgleichen die Breite des ungefärbten Teils der Farbkeilfolie 23. Die gewünschten Breiten können in einem oder in beiden Werkzeugen durch z. B. Aluminiumeinlegeteile 19 abgeblendet werden, so daß mittels einer standartisierten Vorrichtung Farbkeilfolien unterschiedlicher Breite erzeugt werden können. Die Breite des Farbkeils 22 wird durch die Länge der Sonde 6 bestimmt. Durch die geometrische Form und die Abmessungen der im Ausführungsbeispiel keilförmige Sonde 6 und die Tiefe und die Steigung der zum Ende der Sonde hin auslaufenden Austrittsöffnung (Nut) können die Breite des Folienbereiches 22 mit Farbkeil und der vom voll eingefärbten Teil 21 der Folie zum ungefärbten Teil der Farbkeilfolie verlaufende Farbgradient variiert werden.

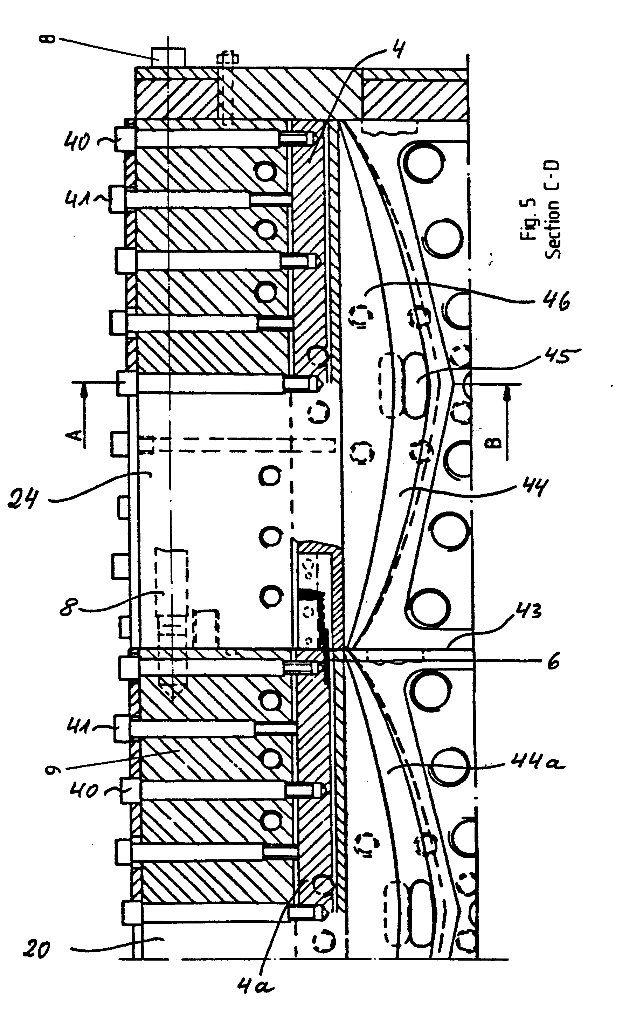

Figur 5 zeigt eine erfindungsgemäße Vorrichtung im Schnitt C-D mit einem Werkzeugteil 20 zur Erzeugung des ungefärbten Teils der Folie und dem Werkzeugteil 24 zur Erzeugung des gefärbten Teils der Folie. Ausgehend von der Verbindungslinie 43 zwischen den beiden Werkzeugteilen, die mittels des Bolzens 8 miteinander verbunden sind, ragt die Sonde 6 vom Werkzeugteil 24 in den Werkzeugteil 20. Die Staubalken 4 bzw. 4a können über Einstellschrauben 40, 41 verstellt werden.

**Patentansprüche**

1. Verfahren zur Herstellung einer endlosen Farbkeilfolie 23 aus einem thermoplastischen Kunststoff mit einem farbigen Randstreifen, dessen Farbintensität in einem an den farbigen Rand streifen anschließenden Bereich in einer Breite von 10 bis 100 mm, vorzugsweise 15 bis 60 mm in den ungefärbten Bereich kontinuierlich übergeht,

gekennzeichnet durch Einspritzen in ein aus zwei querschnittsgleichen Teilen zusammengesetztes Werkzeug

1. eines etwa 1000 bis 3000 mm breiten Stroms ungefärbter Schmelze und

2. eines etwa 100 bis 1000 mm breiten Stromes gefärbter Schmelze sowie

3. eines Teilstromes einer Menge Y gefärbter Schmelze und eines Teilstromes einer Menge (X-Y) ungefärbter Schmelze in, von der Trennungslinie zwischen gefärbter und ungefärbter Schmelze ausgehend, einer Breite von etwa 10 bis 100 mm, vorzugsweise 15 bis 60 mm in den Werkzeugteil für die ungefärbte Schmelze mit kontinuierlich abnehmendem Teil Y der gefärbten in Bezug auf die ungefärbte Schmelze X

mittels einer in Querrichtung zur Strömungsrichtung der Schmelze liegenden und eine im Querschnitt auslaufende Nut aufweisenden Sonde (6) und Coextrusion unter Verschmelzen des ungefärbten Schmelzestromes mit dem gefärbten Schmelzestrom im Bereich des Farbkeils derart, daß im Folienquerschnitt eine schräg verlaufende Überlappungslinie das ungefärbte von dem gefärbten Folienmaterial trennt.

2. Verfahren nach Anspruch 1, dadurch gekennzeichnet, daß zur Regelung der Folienstärke die Dicken des ungefärbten und des gefärbten Folienteils einschließlich des Übergangsbereichs miteinander verglichen werden und über einen Rechner das Förderorgan für den gefärbten Schmelzestrom und die Zufuhr zur Sonde entsprechend geregelt werden.

3. Vorrichtung zur Durchführung des Verfahrens nach Anspruch 1, bei der

- zwei Breitschlitzwerkzeuge (20, 24) untereinander verbunden sind,

wobei dem einen Breitschlitzwerkzeug (24) eine farbige und dem anderen Breitschlitzwerkzeug (20) eine ungefärbte Kunststoffschmelze zuführbar ist,

- bei der ferner jedes Breitschlitzwerkzeug (20, 24)

— einen Anschluß zur Zufuhr der Kunststoffschmelze,

— einen Verteilerkanal (44, 44a),

— einen Staubalken (4, 4a)

— und einen gemeinsamen, verstellbaren Düsenaustrittspalt aufweist,

dadurch gekennzeichnet,

- daß eine Sonde (6) zum Einspritzen eines Teils der farbigen Kunststoffschmelze in den Strom der ungefärbten Kunststoffschmelze vorgesehen ist,

— mit einem sich keilförmig über ihre Länge verengenden Austrittspalt,

— wobei sich die Sonde (6) an einer Stelle, an der sich die Schmelzeströme bereits vollständig in Richtung quer zur Extrusionsrichtung ausgebreitet haben, in den Fluß des ungefärbten Schmelzestromes und senkrecht zu dessen Flußrichtung erstreckt.

4. Vorrichtung nach Anspruch 3, dadurch gekennzeichnet, daß eine durch Zug- und Druckschrauben (40, 41) einstellbare flexible Oberlippe (3.1) zur Dickenkorrektur der Folie vorgesehen ist.

5. Vorrichtung nach Anspruch 3 oder 4, dadurch gekennzeichnet daß die Sonde (6) keilförmig ausgebildet ist.

**Claims**

1. Process for the production of an endless colour wedge foil (23) from a thermoplastic plastics material with a coloured edge sector . whose colour intensity extends continuously in a region adjoining the coloured edge sector in a width of 10 to 100 mm, preferably 15 to 60 mm, into the uncoloured region, characterised by injecting into one of two parts of like cross-section of the overall tool

1. an approximately 1000 to 3000 mm wide stream of uncoloured melt and

2. an approximately 100 to 1000 mm wide stream of coloured melt as well as

3. a part stream of an amount Y of coloured melt and a part stream of an amount (X-Y) of uncoloured melts,

in a width of approximately 10 to 100 mm, preferably 15 to 60 mm extending from the line of separation between coloured and uncoloured melt into the tool part for the uncoloured melt, with continuously decreasing proportion Y of the coloured in relation to the uncoloured melt X, by means of a probe (6) lying transverse to the flow direction of the melt and possessing a slot extending in the transverse direction, and coextrusion with melting of the uncoloured melt stream with the coloured melt stream in the region of the colour wedge such that, in the cross-section of the foil, a line of overlap running inclinedly separates the uncoloured from the coloured foil material.

2. Process according to claim 1, characterised in that that, for control of the foil strength, the thicknesses of the uncoloured and the coloured foil parts are compared with one another inclusively of the transition region and the supply arrangement for the coloured melt flow and the supply to the probe are correspondingly controlled by means of a computer.

3. Arrangement for carrying out the process of claim 1, in which

- two wide slit tools (20, 24) are connected with one another,

with a coloured plastics melt being suppliable to the one wide slit tool (24) and an uncoloured plastics melt being suppliable to the other wide slit tool (20),

- in which, further, each wide slit tool (20, 24) possesses

— a connection for supply of the plastics melt,

— a distribution channel (44, 44a),

— a choker bar (4, 4a)

— and a combined adjustable nozzle outflow gap, characterised in that,

- a probe (6) is provided for injection of a part of the coloured plastics melt into the flow of the uncoloured plastics melt,

- with an outflow gap narrowing in the shape of a wedge over its length,

with the probe (6) extending into the flow of the uncoloured melt flow and at right angles to its flow direction, at which position the melt flows have already widened out completely in the direction at right angles to the extrusion direction.

4. Arrangement according to claim 3, characterised in that a flexible upper lip (3.1) adjustable by draw and compression bolts (40, 41) is provided for thickness correcting.

5. Arrangement according to claim 3 or 4, characterised in that the probe (6) is formed in a wedge shape.


**Claims**

1. Procédé de fabrication, à partir d'une matière thermoplastique, d'une feuille continue (23) à coin coloré comportant une bande marginale colorée dont l'intensité de coloration décroît en continu, dans une zone d'une largeur de 10 à 100 mm, de préférence 15 à 60 mm, contiguë à ladite bande marginale colorée, jusqu'à la zone non colorée

caractérisé par le fait que l'on injecte dans une filière composée de deux parties de même section

1. un flux de masse fondue non colorée d'une largeur d'environ 1000 à 3000 mm et 2. un flux de masse fondue colorée d'une largeur d'environ 100 à 1000 mm ainsi que

3. un flux partiel d'une quantité Y de masse fondue colorée et un flux partiel d'une quantité (X-Y) de masse fondue non colorée dans la partie de filière destinée à la masse fondue non colorée, cela sous une largeur, comptée à partir de la ligne de séparation entre masses fondues colorée et non colorée, d'environ 10 à 100 mm, de préférence 15 à 60 mm, et avec diminution en continu de la partie Y de masse fondue colorée par rapport à la masse fondue non colorée X, au moyen d'une sonde (6) placée transversalement à la direction d'écoulement de la masse fondue et comportant une rainure de section cunéiforme, et l'on coextrude, sous fusion commune, dans la zone du coin coloré le flux de masse fondue non coloré et le flux de masse fondue coloré en sorte que, dans la section de la feuille, une ligne de chevauchement oblique sépare le matériau de feuille non coloré du matériau de feuille coloré.

2. Procédé selon la revendication 1 caractérisé par le fait que, pour la régulation de l'épaisseur de la feuille, on compare entre elles les épaisseurs de la partie de feuille non colorée et de la partie de feuille colorée y compris la zone de transition, et l'on régule en conséquence, par l'intermédiaire d'un calculateur, l'organe transporteur du flux de masse fondue coloré et l'alimentation de la sonde.

3. Dispositif de mise en oeuvre du procédé selon la revendication 1, dans lequel

- deux filières plates (20, 24) sont assemblées entre elles, une masse plastique fondue colorée étant amenable à l'une d'elles (24), et une masse plastique fondue non colorée à l'autre (20),

- et chaque filière plate (20, 24) comporte

— un raccordement pour l'amenée de la masse plastique fondue,

— un canal de distribution (44, 44a),

— une barre de retenue (4, 4a)

— et une fente commune et réglable de sortie de filière, caractérisé par le fait

- qu'il comporte, pour l'injection d'une partie de la masse plastique fondue colorée dans le flux de la masse plastique fondue non colorée une sonde (6)

— qui présente une fente de sortie allant en se rétrécissant en forme de coin sur sa longueur,

— cette sonde (6) s'étendant, à l'intérieur du flux de masse fondue non coloré et transversalement à la direction de ce dernier, en un emplacement où les flux de masse fondue se sont déjà complètement étalés transversalement à la direction d'extrusion.

4. Dispositif selon la revendication 3 caractérisé par le fait qu'il comporte, pour la correction d'épaisseur de la feuille, une lèvre supérieure flexible (3.1) réglable par des vis de traction et de serrage (40, 41).

5. Dispositif selon la revendication 3 ou 4 caractérisé par le fait que la sonde (6) est établie en forme de coin.

Fig. 1
Schnitt: A-B

Fig. 2
Schnitt: C-D

0 073 347

Fig.3

Fig. 4

Fig. 5
Section C-D